(19) Europäisches Patentamt
European Patent Office
Office européen des brevets

(11) **EP 4 765 492 A1**

(12) **EUROPEAN PATENT APPLICATION**

(43) Date of publication:
**24.06.2026 Bulletin 2026/26**

(21) Application number: **25153870.8**

(22) Date of filing: **24.01.2025**

(51) International Patent Classification (IPC):
*H01Q 3/46* (2006.01)    *H01Q 15/14* (2006.01)

(52) Cooperative Patent Classification (CPC):
**H01Q 3/46; H01Q 15/148**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.12.2024 TW 113149851**

(71) Applicant: **TMY Technology Inc.**
**New Taipei City 220056 (TW)**

(72) Inventors:
• **KUO, Hsuan-Hung**
**Taipei City 106 (TW)**
• **WU, Jiun-Wei**
**Taipei City 106 (TW)**

(74) Representative: **Becker, Eberhard**
**Becker Kurig & Partner**
**Patentanwälte mbB**
**Bavariastraße 7**
**80336 München (DE)**

Remarks:
Amended claims in accordance with Rule 137(2) EPC.

(54) **CONFIGURATION METHOD OF REFLECTARRAY AND ELECTRONIC DEVICE USING THE SAME**

(57) A configuration method of reflectarray (500) and an electronic device (100) are provided, wherein the reflectarray (500) includes a plurality of reflective units (510). The configuration method includes: obtaining a first incidence signal characteristic of a target incidence signal ($W_i$) and a first reflected signal characteristic of a target reflected signal ($W_r$); determining a geometric shape type of a virtual reflective surface according to the first incidence signal characteristic and the first reflected signal characteristic; configuring the virtual reflective surface according to the first incidence signal characteristic and the first reflected signal characteristic, wherein the virtual reflective surface intersects a first reflective unit of the reflective units (510); and determining delay compensation of at least a part of the reflective units (510) according to the first incidence signal characteristic, the first reflected signal characteristic, and the geometric shape type to configure the reflective units (510).

Obtaining a incidence signal characteristic of a target incidence signal and a reflected signal characteristic of a target reflected signal — S201

Determining a geometric shape type of a virtual reflective surface according to the incidence signal characteristic and the reflected signal characteristic — S202

Configuring the virtual reflective surface according to the incidence signal characteristic and the reflected signal characteristic, wherein the virtual reflective surface may intersect a reflective unit of the plurality of reflective units in the reflectarray — S203

Determining delay compensations of at least a part of the plurality of reflective units according to the incidence signal characteristic, the reflected signal characteristic, and the geometric shape type to configure the plurality of reflective units — S204

**FIG. 2**

EP 4 765 492 A1

**Description**

BACKGROUND

Technical Field

The disclosure relates to a wireless communication technology, and in particular relates to a configuration method of a reflectarray and an electronic device using the same.

Description of Related Art

With the development of wireless communication technology, a reflectarray has become a common method for achieving high-efficiency transmission. The reflectarray is composed of multiple reflective units. In order to achieve the beam directivity of the reflected signal, the designer must calibrate the delay compensation of each reflective unit. However, different calibration methods must be used for delay compensation for different types of wireless signals. Therefore, how to configure the reflective units of the reflectarray for different wireless signal types is one of the important issues in this field.

SUMMARY

A configuration method of a reflectarray and an electronic device using the same, which may configure delay compensation for the reflective units of the reflectarray, are provided in the disclosure.

A configuration method of the reflectarray is provided in the disclosure, in which the reflectarray includes multiple reflective units. The configuration method includes the following operation. A first incidence signal characteristic of a target incidence signal and a first reflected signal characteristic of a target reflected signal are obtained. A geometric shape type of a virtual reflective surface is determined according to the first incidence signal characteristic and the first reflected signal characteristic. The virtual reflective surface is configured according to the first incidence signal characteristic and the first reflected signal characteristic. The virtual reflective surface intersects a first reflective unit of the reflective units. Delay compensations of at least a part of the reflective units are determined according to the first incidence signal characteristic, the first reflected signal characteristic, and the geometric shape type to configure the reflective units.

In an embodiment of the disclosure, the operation of determining the geometric shape type of the virtual reflective surface according to the first incidence signal characteristic and the first reflected signal characteristic includes the following operation. Whether the target incidence signal is a plane wave is determined according to the first incidence signal characteristic to generate a first determination result. Whether the target reflected signal is a plane wave is determined according to the first reflected signal characteristic to generate a second determination result. The geometric shape type of the virtual reflective surface is determined according to the first determination result and the second determination result.

In an embodiment of the disclosure, the operation of determining the geometric shape type of the virtual reflective surface according to the first determination result and the second determination result includes to following operation. When the first determination result is different from the second determination result, it is determined that the geometric shape type of the virtual reflective surface includes a parabola.

In an embodiment of the disclosure, one of the target incidence signal and the target reflected signal is a non-plane wave, and another one of the target incidence signal and the target reflected signal is a first plane wave. The operation of configuring the virtual reflective surface according to the first incidence signal characteristic and the first reflected signal characteristic, in which the virtual reflective surface intersects a first reflective unit of the reflective units includes the following operation. A position of a source or target of the non-plane wave is defined as an origin of a coordinate system. A Y axis of the coordinate system is parallel to the first plane wave. An intersection point ($D_R \sin \theta_t$, $-D_R \cos \theta_t$) of the non-plane wave and the first reflective unit is determined according to the origin. $\theta_t = \theta_i + \theta_r$. $D_R$ is a distance between the position of the source or target and the first reflective unit, $\theta_i$ is the first reflection angle, and $\theta_r$ is the second reflection angle. The parabola is generated according to the intersection point ($D_R \sin \theta_t$, $-D_R \cos \theta_t$).

In an embodiment of the disclosure, the operation of generating the parabola according to the intersection point ($D_R \sin \theta_t$, $-D_R \cos \theta_r$) includes the following operation. A directrix ($y = -D_R \cos \theta_t - D_R$) is determined according to the intersection point ($D_R \sin \theta_t$, $-D_R \cos \theta_t$) and the distance $D_R$. The origin is set as a focus. A parabola

$$\left( \sqrt{x^2 + y^2} = y + D_R(1 + \cos \theta_t) \right)$$ is generated according to the focus and the directrix.

In an embodiment of the disclosure, the operation of determining the delay compensations of at least a part of the reflective units according to the first incidence signal characteristic, the first reflected signal characteristic, and the geometric shape type to configure the reflective units includes the following operation. A slope $\tan\theta_r$ of the first reflective unit is determined according to $\theta_t$. A virtual straight line $\left( y+D_R\cos\theta_t=\dfrac{\sin\theta_r}{\cos\theta_r}\left(x-D_R\sin\theta_t\right)\right)$ is generated according to the slope $\tan\theta_r$ and the intersection point $(D_R\sin\theta_t,-D_R\cos\theta_r)$. A virtual circle is generated, in which a center of the virtual circle is the origin, and a radius of the virtual circle is the distance $D_R$. A first intersection point and a second intersection point of the virtual circle and the virtual straight line $\left( y+D_R\cos\theta_t=\dfrac{\sin\theta_r}{\cos\theta_r}\left(x-D_R\sin\theta_t\right)\right)$ are determined. A distance between the first intersection point and the intersection point $(D_R\sin\theta_t,-D_R\cos\theta_t)$ is less than a distance between the second intersection point and the intersection point $(D_R\sin\theta_t,-D_R\cos\theta_t)$. A point $\left(x_k,\dfrac{x_k^2}{2D_R(1+\cos\theta_t)}-\dfrac{D_R(1+\cos\theta_t)}{2}\right)$ on the parabola is determined according to a coordinate $x_k$ of the first intersection point on an X axis of the coordinate system. Whether a first coordinate of the intersection point $(D_R\sin\theta_t,-D_R\cos\theta_t)$ on the Y axis is greater than a second coordinate of the point $\left(x_k,\dfrac{x_k^2}{2D_R(1+\cos\theta_t)}-\dfrac{D_R(1+\cos\theta_t)}{2}\right)$ on the Y axis is determined. In response to the first coordinate being greater than the second coordinate, it is determined that a delay compensation is $(\overline{OQ}+\overline{PQ}-D_R)$. $\overline{OQ}$ is a distance between the origin and point $\left(x_k,\dfrac{x_k^2}{2D_R(1+\cos\theta_t)}-\dfrac{D_R(1+\cos\theta_t)}{2}\right)$, and $\overline{PQ}$ is a distance between the intersection point $(D_R\sin\theta_t,-D_R\cos\theta_t)$ and point $\left(x_k,\dfrac{x_k^2}{2D_R(1+\cos\theta_t)}-\dfrac{D_R(1+\cos\theta_t)}{2}\right)$. In response to the first coordinate being less than or equal to the second coordinate, it is determined that the delay compensation is $(\overline{OQ}-\overline{PQ}+D_R)$.

In an embodiment of the disclosure, the first reflective unit is a reflective unit among the reflective units farthest from the source or target of the non-plane wave.

In an embodiment of the disclosure, the operation of determining the delay compensations of at least a part of the reflective units according to the first incidence signal characteristic, the first reflected signal characteristic, and the geometric shape type to configure the reflective units includes the following operation. A point on the parabola corresponding to a coordinate is determined according to the coordinate of the intersection point $(D_R\sin\theta_t,-D_R\cos\theta_t)$ on the X axis of the coordinate system. The delay compensation is determined as $(\overline{OQ}+\overline{PQ}-D_R)$. $\overline{OQ}$ is a distance between the origin and the point, and $\overline{PQ}$ is a distance between the intersection point $(D_R\sin\theta_t,-D_R\cos\theta_t)$ and the point.

In an embodiment of the disclosure, the operation of determining the geometric shape type of the virtual reflective surface according to the first determination result and the second determination result includes to following operation. When the first determination result and the second determination result are the same and both are non-plane waves, it is determined that the geometric shape type of the virtual reflective surface includes an ellipse.

In an embodiment of the disclosure, one of the target incidence signal and the target reflected signal is a first non-plane wave. The operation of configuring the virtual reflective surface according to the first incidence signal characteristic and the first reflected signal characteristic, in which the virtual reflective surface intersects a first reflective unit of the reflective units includes the following operation. A position of a source of the first non-plane wave is defined as an origin of a coordinate system. An ellipse $\left(\sqrt{(x-N)^2+y^2}+\sqrt{(x+N)^2+y^2}=M_1+M_2\right)$ is generated according to the origin. $M_1$ is a distance between the position of the source and the first reflective unit. $M_2$ is a distance between a position of a target hot zone and the first reflective unit. N is half of a distance between the position of the source and the position of the target hot zone.

In an embodiment of the disclosure, the operation of determining the delay compensations of at least a part of the reflective units according to the first incidence signal characteristic, the first reflected signal characteristic, and the geometric shape type to configure the reflective units includes the following operation. The position of the target hot zone and the first reflective unit are connected to generate a virtual straight line $\left(y=\dfrac{y_k}{x_k-N}(x-N)\right)$. A coordinate $(x_k,y_k)$ is the coordinate of the first reflective unit in the coordinate system. A first intersection point and a second intersection point of the ellipse and the virtual straight line $\left(y=\dfrac{y_k}{x_k-N}(x-N)\right)$ are determined. A distance between a coordinate of the first intersection point on an X axis of the coordinate system and a coordinate $x_k$ is less than a distance between a coordinate of the second intersection point on the X axis and the coordinate $x_k$. The delay compensation is determined as $(\overline{SQ}+\overline{PQ}-\overline{SR})$. $\overline{SQ}$ is a distance between the position of the source and the first intersection point, $\overline{PQ}$ is a distance between the first intersection point and the first reflective unit, and $\overline{SR}$ is a distance between the position of the source and the first reflective unit.

In an embodiment of the disclosure, the configuration method further includes the following operation. Multiple delay compensations respectively corresponding to the reflective units are generated. The delay compensation is normalized according to a minimum delay compensation among the delay compensations.

In an embodiment of the disclosure, the operation of determining the geometric shape type of the virtual reflective surface according to the first determination result and the second determination result includes to following operation. When the first determination result and the second determination result are the same and both are plane waves, it is determined that the geometric shape type of the virtual reflective surface includes a straight line.

An electronic device configured with a reflectarray is provided in the disclosure, in which the reflectarray includes multiple reflective units, and the electronic device includes a communication interface and a processor. The communication interface obtains a first incidence signal characteristic of a target incidence signal and a first reflected signal characteristic of a target reflected signal. The processor is coupled to the communication interface and configured to execute the following operation. A geometric shape type of a virtual reflective surface is determined according to the first incidence signal characteristic and the first reflected signal characteristic. The virtual reflective surface is configured according to the first incidence signal characteristic and the first reflected signal characteristic. The virtual reflective surface intersects a first reflective unit of the reflective units. Delay compensations of at least a part of the reflective units are determined according to the first incidence signal characteristic, the first reflected signal characteristic, and the geometric shape type to configure the reflective units.

In one embodiment of the disclosure, the processor is configured to further execute the following operation. The reflectarray and multiple signal transceivers are communicatively connected to through the communication interface. A first signal transceiver is selected from the signal transceivers according to a target position of the target reflected signal. A source position of the target incidence signal is determined according to the first signal transceiver. The virtual reflective surface is configured according to the target position and the source position. The first signal transceiver is controlled to transmit a radio frequency signal to at least one of the reflective units that has been configured.

In one embodiment of the disclosure, the processor is configured to further execute the following operation. The reflectarray and multiple signal transceivers are communicatively connected to through the communication interface. A first signal transceiver is selected from the signal transceivers according to a source position of the target incidence signal. A target position of the target incidence signal is determined according to the first signal transceiver. The virtual reflective surface is configured according to the target position and the source position. The first signal transceiver is controlled to receive a radio frequency signal from at least one of the reflective units that has been configured.

Based on the above, the electronic device of the disclosure may configure a corresponding virtual reflective surface for the reflectarray according to the characteristics of the target incidence signal and the target reflected signal, and configure delay compensation for each reflective unit of the reflectarray according to the virtual reflective surface. After completing the configuration of the reflectarray, the reflectarray may reflect plane waves or non-plane waves to a preset position.

## BRIEF DESCRIPTION OF THE DRAWINGS

FIG. 1 is a schematic diagram of an electronic device configured with a reflectarray according to an embodiment of the disclosure.
FIG. 2 is a flowchart of a configuration method of a reflectarray according to an embodiment of the disclosure.
FIG. 3 is a schematic diagram of a virtual reflective surface including a parabola according to an embodiment of the disclosure.
FIG. 4 is a schematic diagram of a virtual reflective surface including an ellipse according to an embodiment of the disclosure.
FIG. 5 is a schematic diagram of a reflectarray according to an embodiment of the disclosure.
FIG. 6 is a schematic diagram of a reflectarray and a target signal hot zone according to an embodiment of the disclosure.

## DETAILED DESCRIPTION OF DISCLOSED EMBODIMENTS

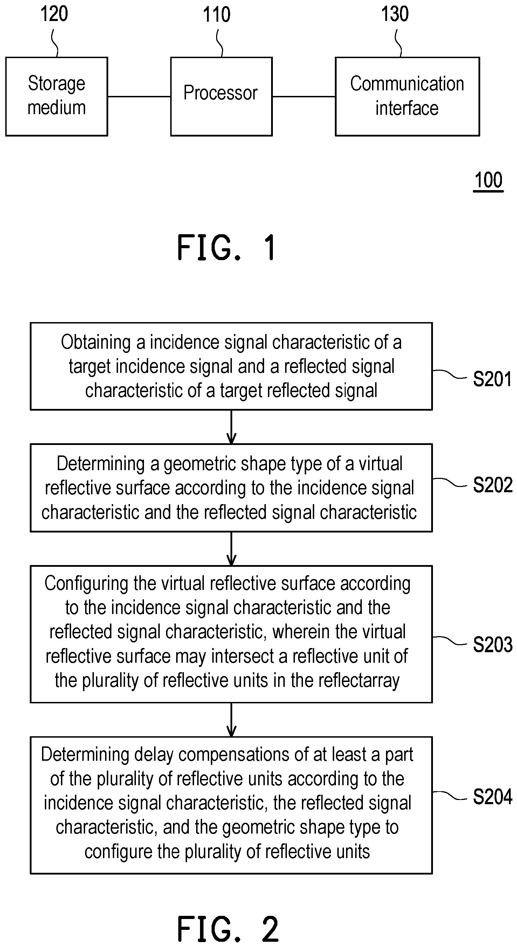

FIG. 1 is a schematic diagram of an electronic device 100 configured with a reflectarray according to an embodiment of the disclosure. The electronic device 100 may include a processor 110, a storage medium 120, and a communication interface 130.

The processor 110 is, for example, a central processing unit (CPU), or other programmable general-purpose or special-purpose micro control unit (MCU), microprocessor, digital signal processor (DSP), programmable controller, application specific integrated circuit (ASIC), graphics processing unit (GPU), image signal processor (ISP), image processing unit (IPU), arithmetic logic unit (ALU), complex programmable logic device (CPLD), field programmable gate array (FPGA), or other similar elements, or a combination of the elements thereof. The processor 110 may be coupled to the storage medium 120 and the communication interface 130, and access and execute multiple modules and various application programs stored in the storage medium 120.

The storage medium 120 is, for example, any type of fixed or removable random access memory (RAM), read-only memory (ROM), flash memory, hard disk drive (HDD), solid state drive (SSD), or similar elements, or a combination of the elements thereof configured to store multiple modules or various applications executable by the processor 110.

The communication interface 130 transmits or receives signals in a wireless or wired manner. The communication interface 130 may also perform operations such as low noise amplification, impedance matching, frequency mixing, up or down frequency conversion, filtering, amplification, and the like. For example, the processor 110 may be communicatively connected to the reflectarray through the communication interface 130, and transmit signals to the reflectarray to configure delay compensation of each reflective unit in the reflectarray.

FIG. 2 is a flowchart of a configuration method of a reflectarray according to an embodiment of the disclosure, in which the configuration method may be implemented by the electronic device 100 as shown in FIG. 1. The reflectarray may include multiple reflective units. When the incidence signal reaches the reflective unit, the reflective unit may delay the generation of the reflected signal corresponding to the incidence signal. That is, the reflective unit may provide a time delay between the incidence signal and the reflected signal. The reflectarray may be a delay tunable reflectarray, and the reflective unit may be a cell in the delay tunable reflectarray. For example, the reflective unit may include an electromagnetic wave reflectarray, an antenna electrode or a tuning electrode as described in patent US 12,107,332 B2. It should be noted that the "distance" in this disclosure is, for example, an actual distance, a normalized distance resulting from normalizing the actual distance according to a wavelength corresponding to the operating frequency, or an electrical length, this disclosure is not limited thereto.

In step S201, the processor 110 may obtain (e.g., through the communication interface 130) an incidence signal characteristic of the target incidence signal (also referred to as designed incidence signal) and a reflected signal characteristic of the target reflected signal (also referred to as designed reflected signal). The reflectarray is configured to receive a target incidence signal and reflect a target reflected signal corresponding to the target incidence signal. The incidence signal characteristic or the reflected signal characteristic may include but are not limited to wavefront (e.g., plane wave or non-plane wave), polarization or frequency.

In step S202, the processor 110 may determine the geometric shape type of a virtual reflective surface according to the incidence signal characteristic and the reflected signal characteristic. Specifically, the processor 110 may determine whether the target incidence signal is a plane wave according to the incidence signal characteristic to generate a first determination result, and determine whether the target reflected signal is a plane wave according to the reflected signal characteristic to generate a second determination result. The processor 110 may determine the geometric shape type of the virtual reflective surface according to the first determination result and the second determination result.

If the first determination result is different from the second determination result (i.e., one of the target incidence signal and the target reflected signal is a plane wave, and the other one of the target incidence signal and the target reflected signal is a non-plane wave), then the processor 110 may determine that the geometric shape type of the virtual reflective surface may be a paraboloid or one or more parabolas included in a paraboloid. The processor 110 may configure the reflectarray according to the parabola.

If the first determination result and the second determination result are the same and both are non-plane waves, the processor 110 may determine that the geometric shape type of the virtual reflective surface may be an ellipsoid or one or more ellipses included in an ellipsoid. The processor 110 may configure the reflectarray according to the ellipse.

If the first determination result and the second determination result are the same and both are plane waves, the processor 110 may determine that the geometric shape type of the virtual reflective surface may be a plane or one or more straight lines included in a plane. The processor 110 may configure the reflectarray according to the straight line. Table 1 shows examples of geometric shape types of virtual reflective surfaces.

Table 1

| Target incidence signal | Target reflected signal | Virtual reflective surface |
|---|---|---|
| Plane wave/from infinity | Plane wave/pointing to infinity | Plane |
| Plane wave/from infinity | Non-plane wave/pointing nearby | Paraboloid |
| Non-plane waves/from nearby | Plane wave/pointing to infinity | Paraboloid |

(continued)

| Target incidence signal | Target reflected signal | Virtual reflective surface |
|---|---|---|
| Non-plane waves/from nearby | Non-plane wave/pointing nearby | Ellipsoid |

In step S203, the processor 110 may configure the virtual reflective surface according to the incidence signal characteristic and the reflected signal characteristic, in which the virtual reflective surface may intersect at least one reflective unit among the reflective units in the reflectarray.

In step S204, the processor 110 may determine the delay compensation of at least a part of the reflective units according to the incidence signal characteristic, the reflected signal characteristic, and the geometric shape type to configure the reflective units.

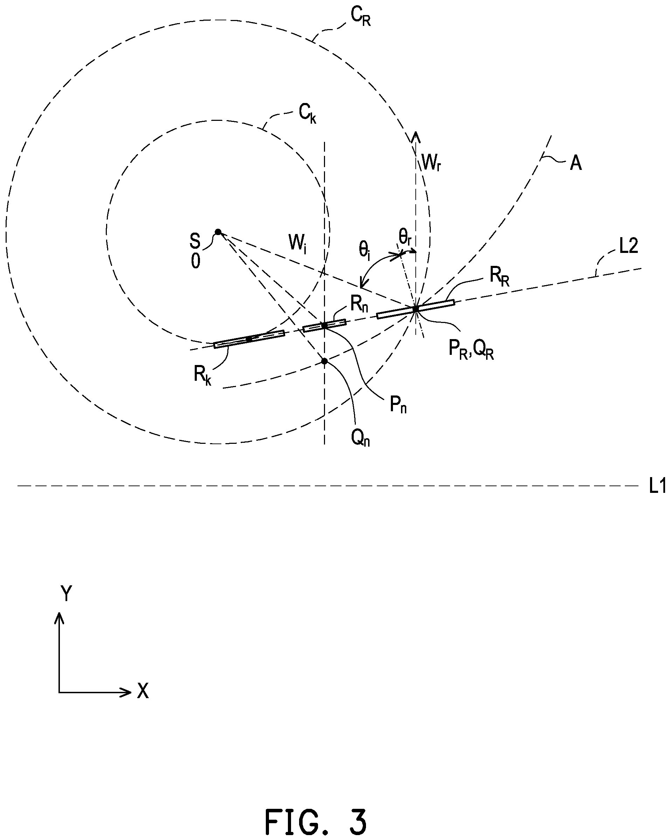

Taking a virtual reflective surface including a parabola as an example, FIG. 3 is a schematic diagram of a virtual reflective surface including a parabola A according to an embodiment of the disclosure. If one of the target incidence signal and the target reflected signal is a non-plane wave, then the other one of the target incidence signal and the target reflected signal may be a plane wave. The embodiment of FIG. 3 assumes that the target incidence signal $W_i$ is a non-plane wave and the target reflected signal $W_r$ is a plane wave, but the disclosure is not limited thereto.

If the target incidence signal is a non-plane wave, the processor 110 may define the position of the source of the target incidence signal (e.g., non-plane wave) as the origin of the coordinate system (e.g., a three-dimensional coordinate system such as the Cartesian coordinate system). If the target reflected signal is a non-plane wave, the processor 110 may define the position of the target of the target reflected signal (e.g., non-plane wave) as the origin of the coordinate system. For example, since FIG. 3 assumes that the target incidence signal $W_i$ is a non-plane wave, the processor 110 may define the position of the source S of the target incidence signal $W_i$ as the origin O. Those with ordinary knowledge in the field will understand that according to the reciprocal characteristics of electromagnetic waves, when the incidence signal is a plane wave (from infinity) and the reflected signal is required to converge at one point, the focus of the reflected signal may be defined as the origin O.

The Y axis of the coordinate system may be parallel to the plane wave. For example, since FIG. 3 assumes that the target reflected signal $W_r$ is a plane wave, the processor 110 may define the Y axis of the coordinate system to be parallel to the target reflected signal $W_r$.

In this embodiment, k is the index of each reflective unit in the reflectarray, where k is a positive integer and $k \in \{1,2,...,M\}$, where M is the total number of the reflective units in the reflectarray. When k=R, the processor 110 may determine according to the origin O that the intersection point of the non-plane wave (e.g., target incidence signal $W_i$) and the reference reflective unit $R_R$ is $P_R$:($D_R \sin \theta_t$,-$D_R \cos \theta_t$), among them $\theta_t = \theta_i + \theta_r$, $R \in \{1,2,...,M\}$. $D_R$ is the normalized distance resulting from the normalization of the distance $d_R$ between the position of the source or target of the non-plane wave and the reference reflective unit $R_R$ on the reflective surface RFA (e.g., the distance $SR_R$ between the source S and the reflective unit $R_R$, or approximately the distance $SP_R$ between the source S and the reference intersection point $P_R$:($D_R \sin \theta_t$,-$D_R \cos \theta_t$) on the reference reflective unit $R_R$, divided by the wavelength of the signal in the environment surrounding the reflective surface). $\theta_i$ is the incident angle (also referred to as the first reflection angle, e.g., the angle between the normal of the reflective unit $R_R$ and the target incidence signal $W_i$) between the non-plane wave (e.g., target incidence signal $W_i$) and the reference reflective unit $R_R$, and $\theta_r$ is the reflection angle (also referred to as the second reflection angle, e.g., the angle between the normal of the reflective unit $R_R$ and the target reflected signal $W_r$) between the plane wave (e.g., target reflected signal $W_r$) and the reference reflective unit $R_R$.

In one embodiment, the greater the index k, the farther the distance between the corresponding reflective unit $R_k$ and the source or target of the non-plane wave (e.g., the source S of the target incidence signal $W_i$). That is, the reflective unit $R_1$ is the reflective unit closest to the source or target of the non-plane wave among M reflective units, and the reflective unit $R_N$ is the reflective unit farthest from the source or target of the non-plane wave among M reflective units.

The processor 110 may generate the parabola A of the virtual reflective surface according to the intersection point $P_R$:($D_R \sin \theta_t$,-$D_R \cos \theta_t$), in which the parabola A may intersect with the intersection point $P_R$:($D_R \sin \theta_t$,-$D_R \cos \theta_t$) of the reference reflective unit $R_R$. Specifically, the processor 110 may determine the directrix $L1:y=-D_R \cos \theta_t -D_R$ according to the intersection point $P_R$:($D_R \sin \theta_t$,-$D_R \cos \theta_t$) and the distance $D_R$. In other words, the distance between the intersection point $P_R$:($D_R \sin\theta_t$,-$D_R \cos \theta_t$) and the directrix L1 is substantially equal to $D_R$. Then, the processor 110 may set the origin O as the focus to generate the parabola $A:\sqrt{x^2+y^2}=y+D_R(1+\cos \theta_t)$ according to the focus O and the directrix $L1:y=-D_R \cos \theta_t -D_R$.

After generating the parabola A, the processor 110 may determine that the slope of the reference reflective unit $R_R$ is $\tan \theta_r$ according to $\theta_t$. The processor 110 may generate a virtual straight line $L2:(y+D_R \cos \theta_t = \frac{\sin \theta_r}{\cos \theta_r}(x-D_R \sin \theta_t))$ according to the slope $\tan \theta_r$ and the intersection point $P_R$:($D_R \sin$

$\theta_t$ ,-$D_R$ cos $\theta_t$). For all $k \in \{1,2,...,M\}$, the reflective unit $R_k$ may be positioned on the virtual straight line $L2: (y+D_R \cos \theta_t = \frac{\sin \theta_r}{\cos \theta_r}(x-D_R \sin \theta_t))$ .

For the reflective unit Rk, when the normalized distance Dk between the signal source and the reflective unit Rk is known, the processor 110 may generate a virtual circle $C_k$ with the origin O as the center and the distance $D_k$ as the radius. The virtual circle $C_k$ and the virtual straight line $L2: (y+D_R \cos \theta_t = \frac{\sin \theta_r}{\cos \theta_r}(x-D_R \sin \theta_t))$ may have at most two intersection points. The processor 110 may select the one closer to the intersection point $P_k:(D_k \sin \theta_{t,k}, -D_k \cos \theta_{t,k})$ from the two intersection points as the intersection point $(x_k, y_k)$ representing the position of the reflective unit $R_k$, where $\theta_{t,k}=\theta_{i,k}+\theta_{r,k}$, $\theta_{i,k}$ is the incident angle between the non-plane wave and the reflective unit $R_k$, and $\theta_{r,k}$ is the reflection angle between the plane wave and the reflective unit $R_k$. That is, assuming that the two intersection points are P and P' respectively, the distance between the intersection point P and the reference intersection point $P_k:(D_k \sin \theta_{t,k}, -D_k \cos \theta_{t,k})$ may be less than the distance between the intersection point P' and the reference intersection point $P_k:(D_k \sin \theta_{t,k}, -D_k \cos \theta_{t,k})$. For the reflective unit $R_R$ (i.e., when k=R), the processor 110 may obtain the intersection point $(x_R, y_R)$ corresponding to the reflective unit $R_R$ according to the virtual circle $C_R$ based on the above method. For the reflective unit $R_n$ (i.e., when k=n), the processor 110 may obtain the intersection point $(x_n, y_n)$ corresponding to the reflective unit $R_n$ according to the virtual circle corresponding to the reflective unit $R_n$ based on the above method.

For the reflective unit $R_k$ , the processor 110 may determine the point $Q_k: \left( x_k, \frac{x_k^2}{2D_R(1+\cos \theta_t)} - \frac{D_R(1+\cos \theta_t)}{2} \right)$ positioned on the parabola A according to the coordinate $x_k$ of the intersection point $(x_k, y_k)$ on the X axis of the coordinate system. The processor 110 may determine whether the coordinate -$D_k$ cos $\theta_{t,k}$ of the intersection point $P_k:(D_k \sin\theta_{tk}, -D_k$ cos $\theta_{t,k})$ on the Y axis is greater than the coordinate $\frac{x_k^2}{2D_R(1+\cos \theta_t)} - \frac{D_R(1+\cos \theta_t)}{2}$ of the point $Q_k: \left( x_k, \frac{x_k^2}{2D_R(1+\cos \theta_t)} - \frac{D_R(1+\cos \theta_t)}{2} \right)$ on the Y axis. If $-D_k \cos \theta_{t,k} > \frac{x_k^2}{2D_R(1+\cos \theta_t)} - \frac{D_R(1+\cos \theta_t)}{2}$ , the processor 110 may determine that the delay compensation $\delta_k$ corresponding to the reflective unit $R_k$ is ($\overline{OQ_k}+\overline{P_kQ_k}$-$D_k$), where $\overline{OQ_k}$ is the distance between the origin O and point $Q_k: \left( x_k, \frac{x_k^2}{2D_R(1+\cos \theta_t)} - \frac{D_R(1+\cos \theta_t)}{2} \right)$ , $\overline{P_kQ_k}$ is the distance between intersection point Pk:($D_k$ sin $\theta_{t,k}$,-Dk cos $\theta_{t,k}$) and point $Q_k: \left( x_k, \frac{x_k^2}{2D_R(1+\cos \theta_t)} - \frac{D_R(1+\cos \theta_t)}{2} \right)$ , and $D_k$ is the normalized distance resulting from the normalization of the distance $d_k$ between the position of the source or target of the non-plane wave and a reference reflective unit $R_k$ on the reflective surface RFA. On the other hand, if $\theta_{t,k} \leq \frac{x_k^2}{2D_R(1+\cos \theta_t)} - \frac{D_R(1+\cos \theta_t)}{2}$ , then the processor 110 may determine that the delay compensation $\delta_k$ corresponding to the reflective unit $R_k$ is ($\overline{OQ_k}-\overline{P_kQ_k}$-$D_k$). Taking the case of k=R as an example, the processor 110 may determine that the delay compensation $\delta_R$ of the reflective unit $R_R$ is ($\overline{OQ_R}+\overline{P_RQ_R}$-$D_R$) according to the point $Q_R$ on the parabola A and corresponding to the reflective unit $R_R$ based on the above method, as shown in FIG. 3.

The processor 110 may calculate delay compensation $\delta_n$ for other reflective units $R_n$ $n \in \{1,2,...,M\}, n \neq R$ based on the parabola $A: \sqrt{x^2+y^2}=y+D_R(1+\cos \theta_t)$ , thereby configuring the reflective unit $R_n$ according to the delay compensation $\delta_n$. Specifically, the processor 110 may generate a virtual circle with the origin O as the center and the distance $D_n$ as the radius, in which the distance $D_n$ is the normalized distance resulting from the normalization of the distance $d_n$ between the position of the source or target of the non-plane wave and the reflective unit $R_n$. The virtual circle and the virtual straight line $L2: (y+D_R \cos \theta_t = \frac{\sin \theta_r}{\cos \theta_r}(x-D_R \sin \theta_t))$ may have at most two intersection points. The processor 110 may select the one closer to the intersection point $P_n:(D_n \sin\theta_{t,n}, -D_n \cos\theta_{t,n})$ from the two intersection points as the intersection point $(x_n, y_n)$ representing the position of the reflective unit $R_n$, where $\theta_{t,n}=\theta_{i,n}+\theta_{r,n}$, $\theta_{i,n}$ is the incident angle between the non-plane wave and the reflective element $R_n$, and $\theta_{r,n}$ is the reflection angle between the plane wave and the reflective element $R_n$.

Next, the processor 110 may determine the point $Q_n: \left( x_n, \frac{x_n^2}{2D_R(1+\cos \theta_t)} - \frac{D_R(1+\cos \theta_t)}{2} \right)$ positioned on the parabola $A: \sqrt{x^2+y^2}=y+D_R(1+\cos \theta_t)$ according to the coordinate $x_n$ of the intersection point $(x_n, y_n)$ on the X axis of the coordinate system. The processor 110 may determine whether the coordinate $-D_n \cos \theta_{t,n}$ of the intersection point $P_n:(D_n \sin\theta_{t,n}, -D_n \cos \theta_{t,n})$ on the Y axis is greater than the coordinate $\frac{x_n^2}{2D_R(1+\cos\theta_t)} - \frac{D_R(1+\cos\theta_t)}{2}$ of the point $Q_n:\left(x_n, \frac{x_n^2}{2D_R(1+\cos\theta_t)} - \frac{D_R(1+\cos\theta_t)}{2}\right)$ on the Y axis. If $-D_n \cos \theta_{t,n} > \frac{x_n^2}{2D_R(1+\cos\theta_t)} - \frac{D_R(1+\cos\theta_t)}{2}$, then the processor 110 may determine that the delay compensation $\delta_n$ corresponding to the reflective unit $R_n$ is $(\overline{OQ_n} + \overline{P_nQ_n} - D_n)$, where $\overline{OQ_n}$ is the distance between the origin O and the point $Q_n:\left(x_n, \frac{x_n^2}{2D_R(1+\cos\theta_t)} - \frac{D_R(1+\cos\theta_t)}{2}\right)$, and $\overline{P_nQ_n}$ is the distance between the intersection point $P_n:(D_n \sin \theta_{t,n}, -D_n \cos \theta_{t,n})$ and the point $Q_n:\left(x_n, \frac{x_n^2}{2D_R(1+\cos\theta_t)} - \frac{D_R(1+\cos\theta_t)}{2}\right)$. On the other hand, if $-D_n \cos \theta_{t,n} \leq \frac{x_n^2}{2D_R(1+\cos\theta_t)} - \frac{D_R(1+\cos\theta_t)}{2}$, then the processor 110 may determine that the delay compensation $\delta_n$ corresponding to the reflective unit $R_n$ is $(\overline{OQ_n} - \overline{P_nQ_n} - D_n)$.

In one embodiment, the processor 110 may normalize the delay compensation $\delta_k$ according to Formula (1) to generate a normalized delay compensation $\delta_{k,norm}$, where $\delta_1$ corresponds to the reflective unit $R_1$ closest to the source or target of the non-plane wave (e.g., the source S of the target incidence signal $W_i$), and $\delta_M$ corresponds to the reflective unit $R_M$ farthest from the source or target of the non-plane wave (e.g., the source S of the target incidence signal $W_i$). The processor 110 may transmit the delay compensation $\delta_{k,norm}$ to the reflectarray to configure the reflective unit $R_k$.

$$\delta_{k,norm} = \delta_k - \min\{\delta_1 : \delta_M\} \quad (1)$$

In one embodiment, the processor 110 may select the reflective unit $R_k$ farthest from the source or target of the non-plane wave (i.e., k=M) from M reflective units of the reflectarray, and generate a parabola $A:\sqrt{x^2+y^2} = y + D_R(1+\cos\theta_t)$ that intersects the reflective unit $R_k$ according to the reflective unit $R_k$. Accordingly, the intersection point $(x_n, y)$ corresponding to each other reflective unit $R_n$ ($n\in\{1,2,...,M-1\}$) may satisfy $-D_n \cos \theta_{t,n} > \frac{x_n^2}{2D_R(1+\cos\theta_t)} - \frac{D_R(1+\cos\theta_t)}{2}$. Therefore, the processor 110 may determine that the delay compensation $\delta_n$ corresponding to the reflective unit $R_n$ is $(\overline{OQn} + \overline{P_nQ_n} - D_n)$.

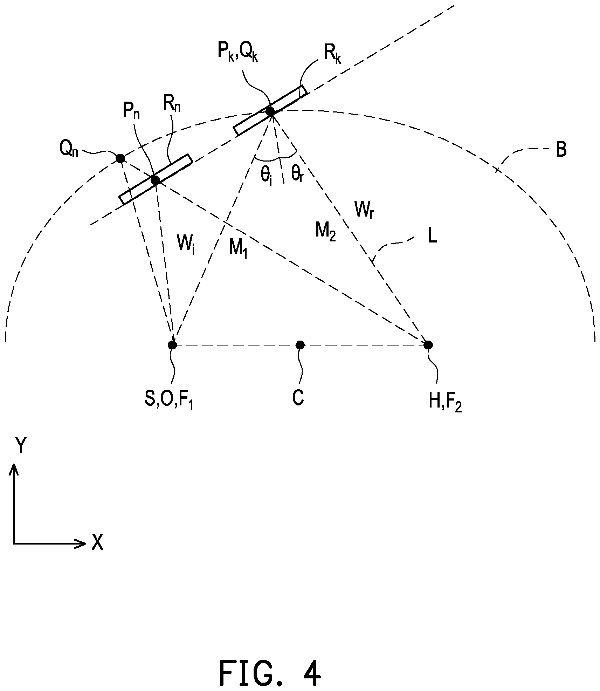

Taking a virtual reflective surface including an ellipse as an example, FIG. 4 is a schematic diagram of a virtual reflective surface including an ellipse B according to an embodiment of the disclosure. Both the target incidence signal $W_i$ and the target reflected signal $W_r$ are non-plane waves. The processor 110 may define the position of the source of the target incidence signal $W_i$ as the origin of the coordinate system or define the position of the target of the target reflected signal $W_r$ as the origin of the coordinate system. For example, FIG. 4 assumes that the source S of the target incidence signal $W_i$ is the origin O. The processor 110 may configure the coordinate system to define a straight line passing through the origin O and the target hot zone H as the X axis of the coordinate system, and define a straight line passing through the origin O and perpendicular to the X axis as the Y axis of the coordinate system.

The processor 110 may obtain the distance $M_1$ between the position of the source S and the reflective unit $R_k$ according to the position coordinate $(x_k, y_k)$ of the reflective unit $R_k$ (k is a positive integer and $k\in\{1,2,...,M\}$, where M is the total number of the reflective units in the reflectarray), and obtain the distance $M_2$ between the position of the target hot zone H of the target reflected signal $W_r$ and the reflective unit $R_k$. The processor 110 may generate the ellipse $B:\sqrt{(x-N)^2+y^2} + \sqrt{(x+N)^2+y^2} = M_1 + M_2$ accordingly, where N is half the distance between the position of the source S and the position of the target hot zone H, that is, the distance between the midpoint C of the source S and the target hot zone H and the source S (or the target hot zone H). The source S and the target hot zone H may respectively serve as the two foci $F_1$ and $F_2$ of the ellipse B. The ellipse B may intersect the reflective unit $R_k$ at $P_k$, where $P_k$ is the intersection point of the target incidence signal $W_i$ and the reflective unit $R_k$.

The processor 110 may obtain the distances $M_{1,1}$ and $M_{2,1}$ between the reflective unit $R_1$ (reflective unit closest to source S) and the two foci $F_1$ and $F_2$, and obtain the distances $M_{1,M}$ and $M_{2,M}$ between the reflective unit $R_M$ (reflective unit farthest from source S) and the two foci $F_1$ and $F_2$. The processor 110 may determine the coordinate of the point $P_k$ representing the position of the reflective unit $R_k$ as $(x_k, y_k)$ according to $M_{1,1}$, $M_{2,1}$, $M_{1,M}$ and $M_{2,M}$. For example, the processor 110 may select a pair of distances ($M_{1,1}$ and $M_{2,1}$, or $M_{1,M}$ and $M_{2,M}$) to draw a virtual ellipse according to the selected distance pair, the focus $F_1$, and the focus $F_2$.

In one embodiment, the processor 110 may obtain the reflection angle $O_{i,k}$ between the target incidence signal $W_i$ and the reflective unit $R_k$, and obtain the reflection angle $\theta_{r,k}$ between the target reflected signal $W_r$ and the reflective unit

$R_k$. The processor 110 may determine the coordinates $(x_k,y_k)$ of the reflective unit $R_k$ (i.e., point $P_k$) according to $\theta_{i,k}$ or $\theta_{r,k}$.

The processor 110 may connect the position of the target hot zone H and the position $(x_k,y_k)$ of the reflective unit $R_k$ to generate a virtual straight line $L:y=\frac{y_k}{x_k-N}(x-N)$. The virtual straight line $L:y=\frac{y_k}{x_k-N}(x-N)$ and the ellipse $B:\sqrt{(x-N)^2+y^2}+\sqrt{(x+N)^2+y^2}=M_1+M_2$ may have at most two intersection points. The processor 110 may select the one closer to the coordinate $x_k$ on the X axis from the two intersection points as the intersection point $Q_k$. That is, it is assumed that the two intersection points are $Q_k$ and $Q_k'$ respectively. The distance between the coordinate of the intersection point $Q_k$ on the X axis of the coordinate system and the coordinate $x_k$ may be less than the distance between the coordinate of the intersection point $Q_k'$ on the X axis of the coordinate system and the coordinate $x_k$.

The processor 110 may determine the delay compensation $\delta_k$ of the reflective unit $R_k$, in which $\delta_k=\overline{SQ_k}+\overline{P_kQ_k}-\overline{SR_k}$, where $\overline{SQ_k}$ is the distance between the position of source S and the intersection point $Q_k$, $\overline{P_kQ_k}$ is the distance between the intersection point $Q_k$ and the reflective unit $R_k$, and $\overline{SR_k}$ is the distance between the position of the source S and the reflective unit $R_k$.

For other reflective units $R_n$ ($n\in\{1,2,...,M\},n\neq k$), the processor 110 may connect the position of the target hot zone H and the position $(x_n,y_n)$ of the reflective unit $R_n$ to generate a virtual straight line $L_n:y=\frac{y_n}{x_n-N}(x-N)$. The virtual straight line $L_n:y=\frac{y_n}{x_n-N}(x-N)$ and the ellipse $B:\sqrt{(x-N)^2+y^2}+\sqrt{(x+N)^2+y^2}=M_1+M_2$ may have at most two intersection points. The processor 110 may select the one closer to the coordinate $x_n$ on the X axis from the two intersection points as the intersection point $Q_n$. That is, it is assumed that the two intersection points are $Q_n$ and $Q_n'$ respectively. The distance between the coordinate of the intersection point $Q_n$ on the X axis of the coordinate system and the coordinate $x_n$ may be less than the distance between the coordinate of the intersection point $Q_n'$ on the X axis of the coordinate system and the coordinate $X_n$.

The processor 110 may determine the delay compensation $\delta_n$ of the reflective unit $R_n$, in which $\delta_n=SQn+P_nQn-SR_n$, where $SQ_n$ is the distance between the position of source S and the intersection point $Q_n$, $\overline{P_nQ_n}$ is the distance between the intersection point $Q_n$ and the reflective unit $R_n$, and $\overline{SR_n}$ is the distance between the position of the source S and the reflective unit $R_n$.

The processor 110 may generate M delay compensations $\delta_1,\delta_2,...,\delta_M$ respectively corresponding to the M reflective units $R_1,R_2,...,R_M$ according to the above method, where $\delta_1$ corresponds to the reflective unit $R_1$ closest to the source S of the target incidence signal $W_i$, and $\delta_M$ corresponds to the reflective unit $R_M$ farthest from the source S of the target incidence signal $W_i$.

In one embodiment, the processor 110 may normalize the delay compensation $\delta_k$ according to Formula (2) to generate a normalized delay compensation $\delta_{k,norm}$. The processor 110 may transmit the delay compensation $\delta_{k,norm}$ to the reflectarray to configure the reflective unit $R_k$.

$$\delta_{k,norm}=\delta_k-\min\{\delta_1:\delta_M\}\quad(2)$$

In one embodiment, if the first determination result and the second determination result are the same and both are non-plane waves (i.e., the target incidence signal and the target reflected signal are both non-plane waves), the processor 110 may obtain the total distance $d_k$ from the source of the target incidence signal, through the reflective unit $R_k$, to the target hot zone of the target reflected signal via the communication interface 130. The processor 110 may normalize the total distance $d_k$ according to the wavelength corresponding to the operating frequency to generate a normalized total distance $D_k$. The processor 110 may calculate the delay compensation $\delta_k$ for each reflective unit $R_k$ according to Formula (3), and transmit the delay compensation $\delta_k$ to the reflectarray to configure the reflective unit $R_k$.

$$\delta_{k,norm}=\delta_k-\min\{\delta_1:\delta_M\}\quad(3)$$

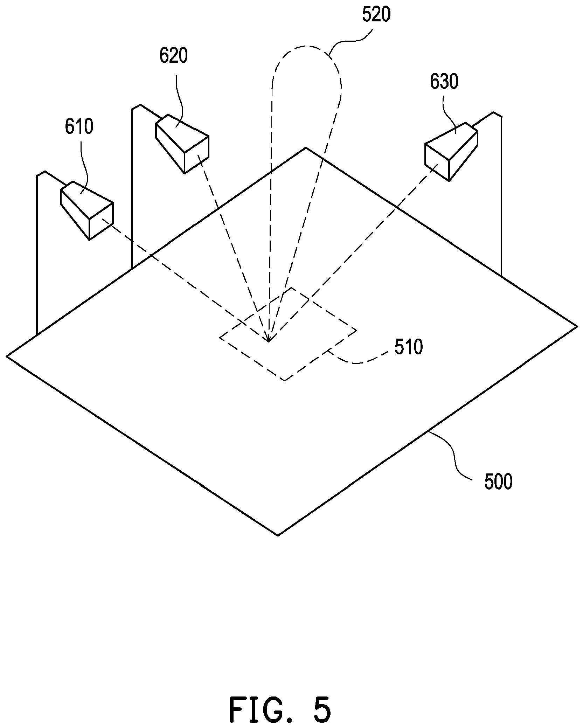

FIG. 5 is a schematic diagram of a reflectarray 500 according to an embodiment of the disclosure. The electronic device 100 may be communicatively connected to the reflectarray 500 and one or more signal transceivers 610, 620, or 630. The reflectarray 500 may include multiple reflective units (e.g., the reflective unit 510). One or more signal transceivers (e.g., the signal transceivers 610, 620, or 630) may be configured to transmit radio frequency signals to the reflectarray 500 so that the radio frequency signals are reflected by the reflectarray 500 to corresponding receivers or the target hot zone.

For example, it is assumed that the electronic device 100 intends to transmit the signal of the signal transceiver 610 to a very distant position through the reflectarray 500. The processor 110 may define the signal transceiver 610 as the source position of the target incidence signal. Then, the processor 110 may calculate a paraboloid-type virtual reflective surface according to the direction of the target position and the position of the signal transceiver 610 according to the foregoing method. The processor 110 may configure delay compensation of one or more reflective units (e.g., reflective unit 510) in the reflectarray 500 according to the virtual reflective surface. After completing the configuration of the delay compensation, the processor 110 may control the signal transceiver 610 to transmit a radio frequency signal to the one or more configured reflective units to generate a reflected beam 520 transmitted toward a target position through the one or more configured reflective units. Similarly, the signal transceiver 610 may also be used to receive signals from a very distant position in the direction pointed by the beam 520 via the reflectarray 500.

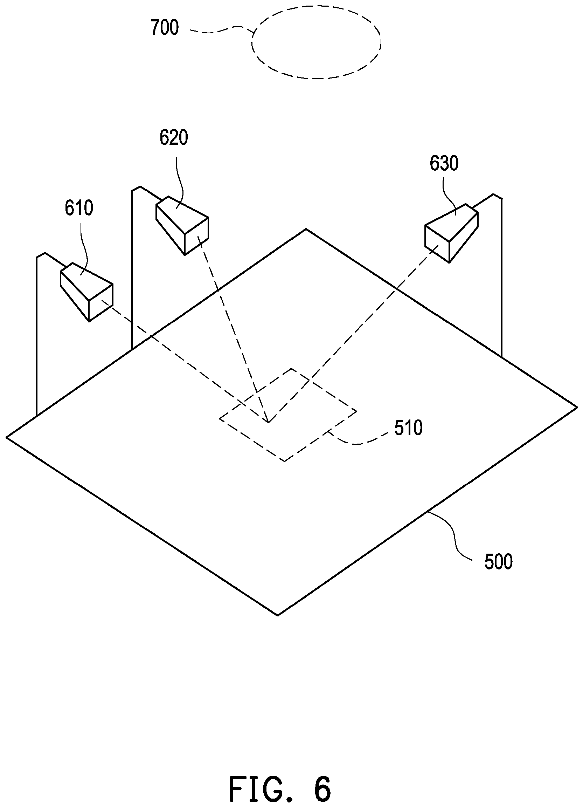

Taking FIG. 6 as an example, it is assumed that the electronic device 100 intends to transmit the signal of the signal transceiver 620 to a nearby target signal hot zone 700 through the reflectarray 500. The processor 110 may define the signal transceiver 620 as the source position of the target incidence signal. Then, the processor 110 may calculate an elliptical surface-type virtual reflective surface according to the center point of the target signal hot zone 700 and the position of the signal transceiver 620 according to the foregoing method. The processor 110 may configure delay compensation of one or more reflective units (e.g., reflective unit 510) in the reflectarray 500 according to the virtual reflective surface. A After completing the configuration of the delay compensation, the processor 110 may control the signal transceiver 620 to transmit the radio frequency signal to the one or more configured reflective units to generate a reflected beam focused on the center point of the target signal hot zone 700 through the one or more configured reflective units. Similarly, the signal transceiver 620 may also be used to receive signals from the center point of the target signal hot zone 700 via the reflectarray 500

In summary, the electronic device of the disclosure may determine how to configure a virtual reflective surface for the reflectarray according to the type of the target incidence signal and the target reflected signal, and then adjust the delay compensation of each reflective unit in the reflectarray according to the virtual reflective surface. The virtual reflective surface may include parabola, ellipse or straight line. The electronic device may configure the delay compensation of the reflective unit according to the distance between the reflective unit and the virtual reflective surface. After completing the configuration of the reflectarray, the reflectarray may reflect plane waves or non-plane waves to a preset position, and the reflected signal may be a plane wave or a non-plane wave.

**Claims**

1. A configuration method of a reflectarray (500), wherein the reflectarray (500) comprises a plurality of reflective units (510, $R_k$, $R_n$, $R_R$), wherein the configuration method comprises:

   obtaining a first incidence signal characteristic of a target incidence signal ($W_i$) and a first reflected signal characteristic of a target reflected signal ($W_r$);
   determining a geometric shape type of a virtual reflective surface according to the first incidence signal characteristic and the first reflected signal characteristic;
   configuring the virtual reflective surface according to the first incidence signal characteristic and the first reflected signal characteristic, wherein the virtual reflective surface intersects a first reflective unit of the reflective units (510, $R_k$, $R_n$, $R_R$); and
   determining delay compensation of at least a part of the reflective units (510, $R_k$, $R_n$, $R_R$) according to the first incidence signal characteristic, the first reflected signal characteristic, and the geometric shape type to configure the reflective units (510, $R_k$, $R_n$, $R_R$).

2. The configuration method according to claim 1, wherein determining the geometric shape type of the virtual reflective surface according to the first incidence signal characteristic and the first reflected signal characteristic comprises:

   determining whether the target incidence signal ($W_i$) is a plane wave according to the first incidence signal characteristic to generate a first determination result;
   determining whether the target reflected signal ($W_r$) is a plane wave according to the first reflected signal characteristic to generate a second determination result; and
   determining the geometric shape type of the virtual reflective surface according to the first determination result and the second determination result.

3. The configuration method according to claim 2, wherein determining the geometric shape type of the virtual reflective surface according to the first determination result and the second determination result comprises: determining that the geometric shape type of the virtual reflective surface comprises a parabola (A) when the first determination result is different from the second determination result.

4. The configuration method according to claim 3, wherein one of the target incidence signal ($W_i$) and the target reflected signal ($W_r$) is a non-plane wave, and another one of the target incidence signal ($W_i$) and the target reflected signal ($W_r$) is a first plane wave, wherein configuring the virtual reflective surface according to the first incidence signal characteristic and the first reflected signal characteristic, and the virtual reflective surface intersecting the first reflective unit of the reflective units (510, $R_k$, $R_n$, $R_R$) comprises:

   defining a position of a source or target of the non-plane wave as an origin (O) of a coordinate system, wherein a Y axis of the coordinate system is parallel to the first plane wave;
   determining an intersection point ($P_R$) ($D_R \sin \theta_t$, $-D_R \cos \theta_t$) of the non-plane wave and the first reflective unit according to the origin (O), wherein $\theta_t = \theta_i + \theta_r$, $D_R$ is a distance between the position of the source or target and the first reflective unit, $\theta_i$ is the first reflection angle, and $\theta_r$ is the second reflection angle; and
   generating the parabola (A) according to the intersection point ($P_R$) ($D_R \sin \theta_t$, $-D_R \cos \theta_t$).

5. The configuration method according to claim 4, wherein generating the parabola (A) according to the intersection point ($P_R$) ($D_R \sin \theta_t$, $-D_R \cos \theta_t$) comprises:

   determining a directrix (L1) ($y = -D_R \cos \theta_t - D_R$) according to the intersection point ($P_R$) ($D_R \sin \theta_t$, $-D_R \cos \theta_r$) and the distance $D_R$;
   setting the origin (O) as a focus; and

   generating a parabola (A) $\left( \sqrt{x^2 + y^2} = y + D_R(1 + \cos \theta_t) \right)$ according to the focus and the directrix (L1).

6. The configuration method according to claim 5, wherein determining the delay compensation of the at least a part of the reflective units (510, $R_k$, $R_n$, $R_R$) according to the first incidence signal characteristic, the first reflected signal characteristic, and the geometric shape type to configure the reflective units (510, $R_k$, $R_n$, $R_R$) comprises:

   determining a slope $\tan \theta_r$ of the first reflective unit according to the $\theta_t$;

   generating a virtual straight line (L2) $\left( y + D_R \cos \theta_t = \frac{\sin \theta_r}{\cos \theta_r} (x - D_R \sin \theta_t) \right)$ according to the slope $\tan \theta_r$ and the intersection point ($P_R$) ($D_R \sin \theta_t$, $-D_R \cos \theta_r$);
   generating a virtual circle ($C_k$, $C_R$), wherein a center of the virtual circle ($C_k$, $C_R$) is the origin (O), and a radius of the virtual circle ($C_k$, $C_R$) is the distance $D_R$;
   determining a first intersection point and a second intersection point of the virtual circle ($C_k$, $C_R$) and the virtual straight line (L2) $\left( y + D_R \cos \theta_t = \frac{\sin \theta_r}{\cos \theta_r} (x - D_R \sin \theta_t) \right)$, wherein a distance between the first intersection point and the intersection point ($P_R$) ($D_R \sin \theta_t$, $-D_R \cos \theta_t$) is less than a distance between the second intersection point and the intersection point ($P_R$) ($D_R \sin \theta_t$, $-D_R \cos \theta_t$);

   determining a point ($Q_k$) $\left( X_k, \frac{x_k^2}{2D_R(1 + \cos \theta_t)} - \frac{D_R(1 + \cos \theta_t)}{2} \right)$ on the parabola (A) according to a coordinate $x_k$ of

   the first intersection point on an X axis of the coordinate system;
   determining whether a first coordinate of the intersection point ($P_R$) ($D_R \sin \theta_t$, $-D_R \cos \theta_t$) on the Y axis is greater than a second coordinate of the point ($Q_k$) $\left( X_k, \frac{x_k^2}{2D_R(1 + \cos \theta_t)} - \frac{D_R(1 + \cos \theta_t)}{2} \right)$ on the Y axis;

   in response to the first coordinate being greater than the second coordinate, determining that the delay compensation is ($\overline{OQ} + \overline{PQ} - D_R$), wherein $\overline{OQ}$ is a distance between the origin (O) and the point ($Q_k$)

   $\left( X_k, \frac{x_k^2}{2D_R(1 + \cos \theta_t)} - \frac{D_R(1 + \cos \theta_t)}{2} \right)$, and $\overline{PQ}$ is a distance between the intersection point ($P_R$) ($D_R \sin \theta_t$, $-D_R$

$\cos \theta_t$) and the point ($Q_k$) $\left( x_k, \dfrac{x_k^2}{2D_R(1+\cos\theta_t)} - \dfrac{D_R(1+\cos\theta_t)}{2} \right)$;

in response to the first coordinate being less than or equal to the second coordinate, determining that the delay compensation is ($OQ-PQ+D_R$).

7. The configuration method according to claim 5, wherein the first reflective unit is a reflective unit among the reflective units (510, $R_k$, $R_n$, $R_R$) farthest from the source or target of the non-plane wave.

8. The configuration method according to claim 7, wherein determining the delay compensation of the at least a part of the reflective units (510, $R_k$, $R_n$, $R_R$) according to the first incidence signal characteristic, the first reflected signal characteristic, and the geometric shape type to configure the reflective units (510, $R_k$, $R_n$, $R_R$) comprises:

determining a point on the parabola (A) according to a coordinate of the intersection point ($P_R$) ($D_R \sin \theta_t$, $-D_R \cos \theta_t$) on an X axis of the coordinate system, wherein the point corresponds to the coordinate;
determining the delay compensation as ($OQ+PQ-D_R$), wherein $\overline{OQ}$ is a distance between the origin (O) and the point, and $\overline{PQ}$ is a distance between the intersection point ($P_R$) ($D_R \sin 0_t$, $-D_R \cos \theta_t$) and the point.

9. The configuration method according to claim 2, wherein determining the geometric shape type of the virtual reflective surface according to the first determination result and the second determination result comprises: determining that the geometric shape type of the virtual reflective surface comprises an ellipse (B) when the first determination result and the second determination result are the same and both the first determination result and the second determination result are non-plane waves.

10. The configuration method according to claim 9, wherein one of the target incidence signal ($W_i$) and the target reflected signal ($W_r$) is a first non-plane wave, wherein configuring the virtual reflective surface according to the first incidence signal characteristic and the first reflected signal characteristic, and the virtual reflective surface intersecting the first reflective unit of the reflective units (510, $R_k$, $R_n$, $R_R$) comprises:

defining a position of a source (S) of the first non-plane wave as an origin (O) of a coordinate system; and

generating an ellipse (B) $\left( \sqrt{(x-N)^2+y^2} + \sqrt{(x+N)^2+y^2} = M_1 + M_2 \right)$ according to the origin (O), wherein $M_1$ is a distance between the position of the source (S) and the first reflective unit, $M_2$ is a distance between a position of a target hot zone (H) and the first reflective unit, and N is half of a distance between the position of the source (S) and the position of the target hot zone (H).

11. The configuration method according to claim 10, wherein determining the delay compensation of the at least a part of the reflective units (510, $R_k$, $R_n$, $R_R$) according to the first incidence signal characteristic, the first reflected signal characteristic, and the geometric shape type to configure the reflective units (510, $R_k$, $R_n$, $R_R$) comprises:

connecting the position of the target hot zone (H) and the first reflective unit to generate a virtual straight line (L) $\left( y=\dfrac{y_k}{x_k-N}(x-N) \right)$, wherein a coordinate ($x_k$, $y_k$) is a coordinate of the first reflective unit in the coordinate system;
determining a first intersection point and a second intersection point of the ellipse (B) and the virtual straight line (L) $\left( y=\dfrac{y_k}{x_k-N}(x-N) \right)$, wherein a distance between a coordinate of the first intersection point on an X axis of the coordinate system and the coordinate $x_k$ is less than a distance between a coordinate of the second intersection point on the X axis and the coordinate $x_k$; and
determining the delay compensation as ($\overline{SQ}+\overline{PQ}-\overline{SR}$), wherein $\overline{SQ}$ is a distance between the position of the source (S) and the first intersection point, $\overline{PQ}$ is a distance between the first intersection point and the first reflective unit, and $\overline{SR}$ is a distance between the position of the source (S) and the first reflective unit.

12. The configuration method according to claim 1, further comprising:

generating a plurality of delay compensations respectively corresponding to the reflective units (510, $R_k$, $R_n$, $R_R$);

and

normalizing the delay compensation according to a minimum delay compensation among the delay compensations.

13. The configuration method according to claim 2, wherein determining the geometric shape type of the virtual reflective surface according to the first determination result and the second determination result comprises:
determining that the geometric shape type of the virtual reflective surface comprises a straight line when the first determination result and the second determination result are the same and both the first determination result and the second determination result are plane waves.

14. An electronic device (100) configured with a reflectarray (500), wherein the reflectarray (500) comprises a plurality of reflective units (510, $R_k$, $R_n$, $R_R$), wherein the electronic device (100) comprises:

a communication interface (130), obtaining a first incidence signal characteristic of a target incidence signal ($W_i$) and a first reflected signal characteristic of a target reflected signal ($W_r$); and
a processor (110), coupled to the communication interface (130) and configured to execute:

determining a geometric shape type of a virtual reflective surface according to the first incidence signal characteristic and the first reflected signal characteristic;
configuring the virtual reflective surface according to the first incidence signal characteristic and the first reflected signal characteristic, wherein the virtual reflective surface intersects a first reflective unit of the reflective units (510, $R_k$, $R_n$, $R_R$); and
determining delay compensation of at least a part of the reflective units (510, $R_k$, $R_n$, $R_R$) according to the first incidence signal characteristic, the first reflected signal characteristic, and the geometric shape type to configure the reflective units (510, $R_k$, $R_n$, $R_R$).

15. The electronic device (100) according to claim 14, wherein the processor (110) is configured to further execute:

communicatively connecting to the reflectarray (500) and a plurality of signal transceivers (610, 620, 630) through the communication interface (130);
selecting a first signal transceiver from the signal transceivers (610, 620, 630) according to a target position of the target reflected signal ($W_r$);
determining a source position of the target incidence signal ($W_i$) according to the first signal transceiver;
configuring the virtual reflective surface according to the target position and the source position; and
controlling the first signal transceiver to transmit a radio frequency signal to at least one of the reflective units (510, $R_k$, $R_n$, $R_R$) that has been configured.

16. The electronic device (100) according to claim 14, wherein the processor (110) is configured to further execute:

communicatively connecting to the reflectarray (500) and a plurality of signal transceivers (610, 620, 630) through the communication interface (130);
selecting a first signal transceiver from the signal transceivers (610, 620, 630) according to a source position of the target incidence signal ($W_i$);
determining a target position of the target incidence signal ($W_i$) according to the first signal transceiver;
configuring the virtual reflective surface according to the target position and the source position; and
controlling the first signal transceiver to receive a radio frequency signal from at least one of the reflective units (510, $R_k$, $R_n$, $R_R$) that has been configured.

**Amended claims in accordance with Rule 137(2) EPC.**

1. A configuration method of a reflectarray (500), wherein the reflectarray (500) comprises a plurality of reflective units (510, $R_k$, $R_n$, $R_R$), wherein the configuration method comprises:

obtaining a first incidence signal characteristic of a target incidence signal ($W_i$) and a first reflected signal characteristic of a target reflected signal ($W_r$);
determining a geometric shape type of a virtual reflective surface according to the first incidence signal characteristic and the first reflected signal characteristic;
configuring the virtual reflective surface according to the first incidence signal characteristic and the first reflected signal characteristic, wherein the virtual reflective surface intersects a first reflective unit of the reflective units (510, $R_k$, $R_n$, $R_R$); and
determining delay compensation of at least a part of the reflective units (510, $R_k$, $R_n$, $R_R$) according to the first incidence signal characteristic, the first reflected signal characteristic, and the geometric shape type to configure the reflective units (510, $R_k$, $R_n$, $R_R$),
wherein the configuration method is **characterized in that**
configuring the virtual reflective surface according to the first incidence signal characteristic and the first reflected signal characteristic comprises:

when one of the target incidence signal ($W_i$) and the target reflected signal ($W_r$) is a non-plane wave, and another one of the target incidence signal ($W_i$) and the target reflected signal ($W_r$) is a first plane wave, defining a position of a source or target of the non-plane wave as an origin (O) of a coordinate system, wherein a Y axis of the coordinate system is parallel to the first plane wave;
determining an intersection point ($P_R$) ($D_R \sin \theta_t$, $-D_R \cos \theta_t$) of the non-plane wave and the first reflective unit according to the origin (O), wherein $\theta_t = \theta_i + \theta_r$, $D_R$ is a distance between the position of the source or target and the first reflective unit, $\theta_i$ is the first reflection angle, and $\theta_r$ is the second reflection angle; and
generating a parabola (A) according to the intersection point ($P_R$) ($D_R \sin \theta_t$, $-D_R \cos \theta_t$).

**2.** The configuration method according to claim 1, wherein determining the geometric shape type of the virtual reflective surface according to the first incidence signal characteristic and the first reflected signal characteristic comprises:

determining whether the target incidence signal ($W_i$) is a plane wave according to the first incidence signal characteristic to generate a first determination result;
determining whether the target reflected signal ($W_r$) is a plane wave according to the first reflected signal characteristic to generate a second determination result; and
determining the geometric shape type of the virtual reflective surface according to the first determination result and the second determination result.

**3.** The configuration method according to claim 2, wherein determining the geometric shape type of the virtual reflective surface according to the first determination result and the second determination result comprises:
determining that the geometric shape type of the virtual reflective surface comprises the parabola (A) when the first determination result is different from the second determination result.

**4.** The configuration method according to claim 1, wherein generating the parabola (A) according to the intersection point ($P_R$) ($D_R \sin \theta_t$, $-D_R \cos \theta_t$) comprises:

determining a directrix (L1) ($y = -D_R \cos \theta_t - D_R$) according to the intersection point ($P_R$) ($D_R \sin \theta_t$, $-D_R \cos \theta_t$) and the distance $D_R$;
setting the origin (O) as a focus; and

generating a parabola (A) ( $\sqrt{x^2 + y^2} = y + D_R(1 + \cos \theta_t)$ ) according to the focus and the directrix (L1).

**5.** The configuration method according to claim 4, wherein determining the delay compensation of the at least a part of the reflective units (510, $R_k$, $R_n$, $R_R$) according to the first incidence signal characteristic, the first reflected signal characteristic, and the geometric shape type to configure the reflective units (510, $R_k$, $R_n$, $R_R$) comprises:

determining a slope $\tan \theta_r$ of the first reflective unit according to the $\theta_t$;

generating a virtual straight line (L2) ( $y + D_R \cos \theta_t = \frac{\sin \theta_r}{\cos \theta_r} (x - D_R \sin \theta_t)$ ) according to the slope $\tan \theta_r$ and the

intersection point ($P_R$) ($D_R \sin \theta_t$, $-D_R \cos \theta_r$);
generating a virtual circle ($C_k$, $C_R$), wherein a center of the virtual circle ($C_k$, $C_R$) is the origin (O), and a radius of the virtual circle ($C_k$, $C_R$) is the distance $D_R$;
determining a first intersection point and a second intersection point of the virtual circle ($C_k$, $C_R$) and the virtual straight line (L2) ( $y+D_R \cos\theta_t = \frac{\sin\theta_r}{\cos\theta_r}(x-D_R \sin\theta_t)$ ), wherein a distance between the first intersection point and the intersection point ($P_R$) ($D_R \sin\theta_t$, $-D_R \cos\theta_t$) is less than a distance between the second intersection point and the intersection point ($P_R$) ($D_R \sin\theta_t$, $-D_R \cos\theta_t$);

determining a point ($Q_k$) ( $x_k$, $\frac{x_k^2}{2D_R(1+\cos\theta_t)} - \frac{D_R(1+\cos\theta_t)}{2}$ ) on the parabola (A) according to a coordinate $x_k$ of the

first intersection point on an X axis of the coordinate system;
determining whether a first coordinate of the intersection point ($P_R$) ($D_R \sin\theta_t$, $-D_R \cos\theta_t$) on the Y axis is greater than a second coordinate of the point ($Q_k$) $x_k$, $\frac{x_k^2}{2D_R(1+\cos\theta_t)} - \frac{D_R(1+\cos\theta_t)}{2}$ ) on the Y axis;

in response to the first coordinate being greater than the second coordinate, determining that the delay compensation is ($\overline{OQ}+\overline{PQ}-D_R$), wherein OQ is a distance between the origin (O) and the point ($Q_k$)

$x_k$, $\frac{x_k^2}{2D_R(1+\cos\theta_t)} - \frac{D_R(1+\cos\theta_t)}{2}$ ), and $\overline{PQ}$ is a distance between the intersection point ($P_R$) ($D_R \sin\theta_t$, $-D_R$

cos $\theta_t$) and the point ($Q_k$) $x_k$, $\frac{x_k^2}{2D_R(1+\cos\theta_t)} - \frac{D_R(1+\cos\theta_t)}{2}$ );

in response to the first coordinate being less than or equal to the second coordinate, determining that the delay compensation is ($\overline{OQ}-\overline{PQ}+D_R$).

**6.** The configuration method according to claim 4, wherein the first reflective unit is a reflective unit among the reflective units (510, $R_k$, $R_n$, $R_R$) farthest from the source or target of the non-plane wave.

**7.** The configuration method according to claim 6, wherein determining the delay compensation of the at least a part of the reflective units (510, $R_k$, $R_n$, $R_R$) according to the first incidence signal characteristic, the first reflected signal characteristic, and the geometric shape type to configure the reflective units (510, $R_k$, $R_n$, $R_R$) comprises:

determining a point on the parabola (A) according to a coordinate of the intersection point ($P_R$) ($D_R \sin\theta_t$, $-D_R \cos$ $\theta_t$) on an X axis of the coordinate system, wherein the point corresponds to the coordinate;
determining the delay compensation as ($\overline{OQ}+\overline{PQ}-D_R$), wherein OQ is a distance between the origin (O) and the point, and $\overline{PQ}$ is a distance between the intersection point ($P_R$) ($D_R \sin\theta_t$, $-D_R \cos\theta_t$) and the point.

**8.** The configuration method according to claim 2, wherein determining the geometric shape type of the virtual reflective surface according to the first determination result and the second determination result comprises: determining that the geometric shape type of the virtual reflective surface comprises an ellipse (B) when the first determination result and the second determination result are the same and both the first determination result and the second determination result are non-plane waves.

**9.** The configuration method according to claim 8, wherein one of the target incidence signal ($W_i$) and the target reflected signal ($W_r$) is a first non-plane wave, wherein configuring the virtual reflective surface according to the first incidence signal characteristic and the first reflected signal characteristic, and the virtual reflective surface intersecting the first reflective unit of the reflective units (510, $R_k$, $R_n$, $R_R$) comprises:

defining a position of a source (S) of the first non-plane wave as an origin (O) of a coordinate system; and

generating an ellipse (B) ( $\sqrt{(x-N)^2+y^2}+\sqrt{(x+N)^2+y^2}=M_1+M_2$ ) according to the origin (O), wherein $M_1$

is a distance between the position of the source (S) and the first reflective unit, $M_2$ is a distance between a position of a target hot zone (H) and the first reflective unit, and N is half of a distance between the position of the source (S) and the position of the target hot zone (H).

**10.** The configuration method according to claim 9, wherein determining the delay compensation of the at least a part of the reflective units (510, $R_k$, $R_n$, $R_R$) according to the first incidence signal characteristic, the first reflected signal characteristic, and the geometric shape type to configure the reflective units (510, $R_k$, $R_n$, $R_R$) comprises:

connecting the position of the target hot zone (H) and the first reflective unit to generate a virtual straight line (L) ( $y = \frac{y_k}{x_k\text{-}N} (x\text{-}N)$ ), wherein a coordinate ($x_k$, $y_k$) is a coordinate of the first reflective unit in the coordinate system;

determining a first intersection point and a second intersection point of the ellipse (B) and the virtual straight line (L) ( $y = \frac{y_k}{x_k\text{-}N} (x\text{-}N)$ ), wherein a distance between a coordinate of the first intersection point on an X axis of the coordinate system and the coordinate $x_k$ is less than a distance between a coordinate of the second intersection point on the X axis and the coordinate $x_k$; and

determining the delay compensation as ($\overline{SQ}+\overline{PQ}-\overline{SR}$), wherein $\overline{SQ}$ is a distance between the position of the source (S) and the first intersection point, $\overline{PQ}$ is a distance between the first intersection point and the first reflective unit, and $\overline{SR}$ is a distance between the position of the source (S) and the first reflective unit.

**11.** The configuration method according to claim 1, further comprising:

generating a plurality of delay compensations respectively corresponding to the reflective units (510, $R_k$, $R_n$, $R_R$); and

normalizing the delay compensation according to a minimum delay compensation among the delay compensations.

**12.** The configuration method according to claim 2, wherein determining the geometric shape type of the virtual reflective surface according to the first determination result and the second determination result comprises:
determining that the geometric shape type of the virtual reflective surface comprises a straight line when the first determination result and the second determination result are the same and both the first determination result and the second determination result are plane waves.

**13.** An electronic device (100) adapted to be connected to a reflectarray (500), wherein the reflectarray (500) comprises a plurality of reflective units (510, $R_k$, $R_n$, $R_R$), wherein the electronic device (100) comprises:

a communication interface (130), obtaining a first incidence signal characteristic of a target incidence signal ($W_i$) and a first reflected signal characteristic of a target reflected signal ($W_r$); and

a processor (110), coupled to the communication interface (130) and configured to execute:

determining a geometric shape type of a virtual reflective surface according to the first incidence signal characteristic and the first reflected signal characteristic;

configuring the virtual reflective surface according to the first incidence signal characteristic and the first reflected signal characteristic, wherein the virtual reflective surface intersects a first reflective unit of the reflective units (510, $R_k$, $R_n$, $R_R$); and

determining delay compensation of at least a part of the reflective units (510, $R_k$, $R_n$, $R_R$) according to the first incidence signal characteristic, the first reflected signal characteristic, and the geometric shape type to configure the reflective units (510, $R_k$, $R_n$, $R_R$),

wherein the electronic device (100) is **characterized in that**

the processor (110) is configured to further execute:

when one of the target incidence signal ($W_i$) and the target reflected signal ($W_r$) is a non-plane wave, and another one of the target incidence signal ($W_i$) and the target reflected signal ($W_r$) is a first plane wave, defining a position of a source or target of the non-plane wave as an origin (O) of a coordinate system, wherein a Y axis of the coordinate system is parallel to the first plane wave;

determining an intersection point ($P_R$) ($D_R \sin \theta_t$, $-D_R \cos \theta_t$) of the non-plane wave and the first reflective unit according to the origin (O), wherein $\theta_t = \theta_i + \theta_r$, $D_R$ is a distance between the position of the source or target and the first reflective unit, $\theta_i$ is the first reflection angle, and $\theta_r$ is the second reflection angle; and

generating a parabola (A) according to the intersection point ( $P_R$ ) ($D_R \sin \theta_t$, $-D_R \cos \theta_t$)..

**14.** The electronic device (100) according to claim 13, wherein the processor (110) is configured to further execute:

communicatively connecting to the reflectarray (500) and a plurality of signal transceivers (610, 620, 630) through the communication interface (130);
selecting a first signal transceiver from the signal transceivers (610, 620, 630) according to a target position of the target reflected signal ($W_r$);
determining a source position of the target incidence signal ($W_i$) according to the first signal transceiver;
configuring the virtual reflective surface according to the target position and the source position; and
controlling the first signal transceiver to transmit a radio frequency signal to at least one of the reflective units (510, $R_k$, $R_n$, $R_R$) that has been configured.

**15.** The electronic device (100) according to claim 13, wherein the processor (110) is configured to further execute:

communicatively connecting to the reflectarray (500) and a plurality of signal transceivers (610, 620, 630) through the communication interface (130);
selecting a first signal transceiver from the signal transceivers (610, 620, 630) according to a source position of the target incidence signal ($W_i$);
determining a target position of the target incidence signal ($W_i$) according to the first signal transceiver;
configuring the virtual reflective surface according to the target position and the source position; and
controlling the first signal transceiver to receive a radio frequency signal from at least one of the reflective units (510, $R_k$, $R_n$, $R_R$) that has been configured.

**1.** A configuration method of a reflectarray (500), wherein the reflectarray (500) comprises a plurality of reflective units (510, $R_k$, $R_n$, $R_R$), wherein the configuration method comprises:

obtaining a first incidence signal characteristic of a target incidence signal ($W_i$) and a first reflected signal characteristic of a target reflected signal ($W_r$);
determining a geometric shape type of a virtual reflective surface according to the first incidence signal characteristic and the first reflected signal characteristic;
configuring the virtual reflective surface according to the first incidence signal characteristic and the first reflected signal characteristic, wherein the virtual reflective surface intersects a first reflective unit of the reflective units (510, $R_k$, $R_n$, $R_R$); and
determining delay compensation of at least a part of the reflective units (510, $R_k$, $R_n$, $R_R$) according to the first incidence signal characteristic, the first reflected signal characteristic, and the geometric shape type to configure the reflective units (510, $R_k$, $R_n$, $R_R$),
wherein the configuration method is **characterized in that**
one of the target incidence signal ($W_i$) and the target reflected signal ($W_r$) is a first non-plane wave,
wherein configuring the virtual reflective surface according to the first incidence signal characteristic and the first reflected signal characteristic comprises:

when the target incidence signal ($W_i$) and the target reflected signal ($W_r$) are non-plane waves, defining a position of a source (S) of the first non-plane wave as an origin (O) of a coordinate system; and

generating an ellipse (B) ( $\sqrt{(x - N)^2 + y^2} + \sqrt{(x + N)^2 + y^2} = M_1 + M_2$ ) according to the origin (O), wherein $M_1$ is a distance between the position of the source (S) and the first reflective unit, $M_2$ is a distance between a position of a target hot zone (H) and the first reflective unit, and N is half of a distance between the position of the source (S) and the position of the target hot zone (H).

**2.** The configuration method according to claim 1, wherein determining the geometric shape type of the virtual reflective surface according to the first incidence signal characteristic and the first reflected signal characteristic comprises:

determining whether the target incidence signal ($W_i$) is a plane wave according to the first incidence signal characteristic to generate a first determination result;
determining whether the target reflected signal ($W_r$) is a plane wave according to the first reflected signal characteristic to generate a second determination result; and
determining the geometric shape type of the virtual reflective surface according to the first determination result and the second determination result.

**3.** The configuration method according to claim 2, wherein determining the geometric shape type of the virtual reflective surface according to the first determination result and the second determination result comprises: determining that the geometric shape type of the virtual reflective surface comprises a parabola (A) when the first determination result is different from the second determination result.

**4.** The configuration method according to claim 3, wherein one of the target incidence signal ($W_i$) and the target reflected signal ($W_r$) is a non-plane wave, and another one of the target incidence signal ($W_i$) and the target reflected signal ($W_r$) is a first plane wave, wherein configuring the virtual reflective surface according to the first incidence signal characteristic and the first reflected signal characteristic, and the virtual reflective surface intersecting the first reflective unit of the reflective units (510, $R_k$, $R_n$, $R_R$) comprises:

> defining a position of a source or target of the non-plane wave as an origin (O) of a coordinate system, wherein a Y axis of the coordinate system is parallel to the first plane wave;
> determining an intersection point ($P_R$) ($D_R \sin \theta_t$, $-D_R \cos \theta_t$) of the non-plane wave and the first reflective unit according to the origin (O), wherein $\theta_t = \theta_i + \theta_r$, $D_R$ is a distance between the position of the source or target and the first reflective unit, $\theta_i$ is the first reflection angle, and $\theta_r$ is the second reflection angle; and
> generating the parabola (A) according to the intersection point ($P_R$) ($D_R \sin \theta_t$, $-D_R \cos \theta_t$).

**5.** The configuration method according to claim 4, wherein generating the parabola (A) according to the intersection point ($P_R$) ($D_R \sin \theta_t$, $-D_R \cos \theta_t$) comprises:

> determining a directrix (L1) ($y = -D_R \cos \theta_t - D_R$) according to the intersection point ($P_R$) ($D_R \sin \theta_t$, $-D_R \cos \theta_t$) and the distance $D_R$;
> setting the origin (O) as a focus; and
> 
> generating a parabola (A) ( $\sqrt{x^2+y^2} = y + D_R(1+\cos\theta_t)$ ) according to the focus and the directrix (L1).

**6.** The configuration method according to claim 5, wherein determining the delay compensation of the at least a part of the reflective units (510, $R_k$, $R_n$, $R_R$) according to the first incidence signal characteristic, the first reflected signal characteristic, and the geometric shape type to configure the reflective units (510, $R_k$, $R_n$, $R_R$) comprises:

> determining a slope $\tan \theta_r$ of the first reflective unit according to the $\theta_t$;
> 
> generating a virtual straight line (L2) ( $y + D_R \cos\theta_t = \dfrac{\sin\theta_r}{\cos\theta_r}(x - D_R \sin\theta_t)$ ) according to the slope $\tan\theta_r$ and the
> 
> intersection point ($P_R$) ($D_R \sin \theta_t$, $-D_R \cos \theta_r$);
> generating a virtual circle ($C_k$, $C_R$), wherein a center of the virtual circle ($C_k$, $C_R$) is the origin (O), and a radius of the virtual circle ($C_k$, $C_R$) is the distance $D_R$;
> determining a first intersection point and a second intersection point of the virtual circle ($C_k$, $C_R$) and the virtual
> 
> straight line (L2) ( $y + D_R \cos\theta_t = \dfrac{\sin\theta_r}{\cos\theta_r}(x - D_R \sin\theta_t)$ ), wherein a distance between the first intersection point
> 
> and the intersection point ($P_R$) ($D_R \sin \theta_t$, $-D_R \cos \theta_t$) is less than a distance between the second intersection point and the intersection point ($P_R$) ($D_R \sin \theta_t$, $-D_R \cos \theta_t$);
> 
> determining a point ($Q_k$) $x_k$, $\dfrac{x_k^2}{2D_R(1+\cos\theta_t)} - \dfrac{D_R(1+\cos\theta_t)}{2}$ ) on the parabola (A) according to a coordinate $x_k$ of the
> 
> first intersection point on an X axis of the coordinate system;
> determining whether a first coordinate of the intersection point ($P_R$) ($D_R \sin \theta_t$, $-D_R \cos \theta_t$) on the Y axis is greater
> 
> than a second coordinate of the point ($Q_k$) ( $x_k$, $\dfrac{x_k^2}{2D_R(1+\cos\theta_t)} - \dfrac{D_R(1+\cos\theta_t)}{2}$ ) on the Y axis;
> 
> in response to the first coordinate being greater than the second coordinate, determining that the delay compensation is ($\overline{OQ} + \overline{PQ} - D_R$), wherein OQ is a distance between the origin (O) and the point ($Q_k$) (

$$x_k, \frac{x_k^2}{2D_R(1+\cos\theta_t)} - \frac{D_R(1+\cos\theta_t)}{2}$$

), and $\overline{PQ}$ is a distance between the intersection point $(P_R)$ $(D_R \sin\theta_t, -D_R \cos\theta_t)$

and the point $(Q_k)$ $x_k, \frac{x_k^2}{2D_R(1+\cos\theta_t)} - \frac{D_R(1+\cos\theta_t)}{2}$ ;

in response to the first coordinate being less than or equal to the second coordinate, determining that the delay compensation is $(\overline{OQ}-\overline{FQ}+D_R)$.

7. The configuration method according to claim 5, wherein the first reflective unit is a reflective unit among the reflective units $(510, R_k, R_n, R_R)$ farthest from the source or target of the non-plane wave.

8. The configuration method according to claim 7, wherein determining the delay compensation of the at least a part of the reflective units $(510, R_k, R_n, R_R)$ according to the first incidence signal characteristic, the first reflected signal characteristic, and the geometric shape type to configure the reflective units $(510, R_k, R_n, R_R)$ comprises:

determining a point on the parabola (A) according to a coordinate of the intersection point $(P_R)$ $(D_R \sin\theta_t, -D_R \cos\theta_t)$ on an X axis of the coordinate system, wherein the point corresponds to the coordinate;
determining the delay compensation as $(\overline{OQ}+\overline{PQ}-D_R)$, wherein $\overline{OQ}$ is a distance between the origin (O) and the point, and $\overline{PQ}$ is a distance between the intersection point $(P_R)$ $(D_R \sin\theta_t, -D_R \cos\theta_t)$ and the point.

9. The configuration method according to claim 2, wherein determining the geometric shape type of the virtual reflective surface according to the first determination result and the second determination result comprises: determining that the geometric shape type of the virtual reflective surface comprises the ellipse (B) when the first determination result and the second determination result are the same and both the first determination result and the second determination result are non-plane waves.

10. The configuration method according to claim 9, wherein determining the delay compensation of the at least a part of the reflective units $(510, R_k, R_n, R_R)$ according to the first incidence signal characteristic, the first reflected signal characteristic, and the geometric shape type to configure the reflective units $(510, R_k, R_n, R_R)$ comprises:

connecting the position of the target hot zone (H) and the first reflective unit to generate a virtual straight line (L) (

$$y = \frac{y_k}{x_k-N}(x-N)$$ ), wherein a coordinate $(x_k, y_k)$ is a coordinate of the first reflective unit in the coordinate system;

determining a first intersection point and a second intersection point of the ellipse (B) and the virtual straight line (L) ( $$y = \frac{y_k}{x_k-N}(x-N)$$ ), wherein a distance between a coordinate of the first intersection point on an X axis of the coordinate system and the coordinate $x_k$ is less than a distance between a coordinate of the second intersection point on the X axis and the coordinate $x_k$; and
determining the delay compensation as $(\overline{SQ}+\overline{PQ}-\overline{SR})$, wherein $\overline{SQ}$ is a distance between the position of the source (S) and the first intersection point, $\overline{PQ}$ is a distance between the first intersection point and the first reflective unit, and $\overline{SR}$ is a distance between the position of the source (S) and the first reflective unit.

11. The configuration method according to claim 1, further comprising:

generating a plurality of delay compensations respectively corresponding to the reflective units $(510, R_k, R_n, R_R)$; and
normalizing the delay compensation according to a minimum delay compensation among the delay compensations.

12. The configuration method according to claim 2, wherein determining the geometric shape type of the virtual reflective surface according to the first determination result and the second determination result comprises: determining that the geometric shape type of the virtual reflective surface comprises a straight line when the first determination result and the second determination result are the same and both the first determination result and the second determination result are plane waves.

13. An electronic device (100) adapted to be connected to a reflectarray (500), wherein the reflectarray (500) comprises a plurality of reflective units (510, $R_k$, $R_n$, $R_R$), wherein the electronic device (100) comprises:

a communication interface (130), obtaining a first incidence signal characteristic of a target incidence signal ($W_i$) and a first reflected signal characteristic of a target reflected signal ($W_r$); and
a processor (110), coupled to the communication interface (130) and configured to execute:

determining a geometric shape type of a virtual reflective surface according to the first incidence signal characteristic and the first reflected signal characteristic;
configuring the virtual reflective surface according to the first incidence signal characteristic and the first reflected signal characteristic, wherein the virtual reflective surface intersects a first reflective unit of the reflective units (510, $R_k$, $R_n$, $R_R$); and
determining delay compensation of at least a part of the reflective units (510, $R_k$, $R_n$, $R_R$) according to the first incidence signal characteristic, the first reflected signal characteristic, and the geometric shape type to configure the reflective units (510, $R_k$, $R_n$, $R_R$),
wherein the electronic device (100) is **characterized in that**
the processor (110) is configured to further execute:

when the target incidence signal ($W_i$) and the target reflected signal ($W_r$) are non-plane waves, defining a position of a source (S) of the first non-plane wave as an origin (O) of a coordinate system; and

generating an ellipse (B) ( $\sqrt{(x-N)^2+y^2}+\sqrt{(x+N)^2+y^2} = M_1 + M_2$ ) according to the origin (O), wherein $M_1$ is a distance between the position of the source (S) and the first reflective unit, $M_2$ is a distance between a position of a target hot zone (H) and the first reflective unit, and N is half of a distance between the position of the source (S) and the position of the target hot zone (H).

14. The electronic device (100) according to claim 13, wherein the processor (110) is configured to further execute:

communicatively connecting to the reflectarray (500) and a plurality of signal transceivers (610, 620, 630) through the communication interface (130);
selecting a first signal transceiver from the signal transceivers (610, 620, 630) according to a target position of the target reflected signal ($W_r$);
determining a source position of the target incidence signal ($W_i$) according to the first signal transceiver;
configuring the virtual reflective surface according to the target position and the source position; and
controlling the first signal transceiver to transmit a radio frequency signal to at least one of the reflective units (510, $R_k$, $R_n$, $R_R$) that has been configured.

15. The electronic device (100) according to claim 13, wherein the processor (110) is configured to further execute:

communicatively connecting to the reflectarray (500) and a plurality of signal transceivers (610, 620, 630) through the communication interface (130);
selecting a first signal transceiver from the signal transceivers (610, 620, 630) according to a source position of the target incidence signal ($W_i$);
determining a target position of the target incidence signal ($W_i$) according to the first signal transceiver;
configuring the virtual reflective surface according to the target position and the source position; and
controlling the first signal transceiver to receive a radio frequency signal from at least one of the reflective units (510, $R_k$, $R_n$, $R_R$) that has been configured.

120    110    130

| Storage medium | Processor | Communication interface |

100

FIG. 1

| Obtaining a incidence signal characteristic of a target incidence signal and a reflected signal characteristic of a target reflected signal | ⌐ S201

| Determining a geometric shape type of a virtual reflective surface according to the incidence signal characteristic and the reflected signal characteristic | ⌐ S202

| Configuring the virtual reflective surface according to the incidence signal characteristic and the reflected signal characteristic, wherein the virtual reflective surface may intersect a reflective unit of the plurality of reflective units in the reflectarray | ⌐ S203

| Determining delay compensations of at least a part of the plurality of reflective units according to the incidence signal characteristic, the reflected signal characteristic, and the geometric shape type to configure the plurality of reflective units | ⌐ S204

FIG. 2

FIG. 3

FIG. 4

FIG. 5

FIG. 6

**EUROPEAN SEARCH REPORT**

Application Number

EP 25 15 3870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/088500 A1 (HUAWEI TECH CO LTD [CN]; MEKKI SAMI [DE]) 2 May 2024 (2024-05-02) | 1-5,12 | INV. H01Q3/46 H01Q15/14 |
| A | * figures 1-15 * <br> * page 1, line 5 - page 24, line 31 * | 6 | |
| X | EP 1 120 856 B1 (UNIV MADRID POLITECNICA [ES]) 26 April 2006 (2006-04-26) | 1-5,7,8, 12 | |
| A | * figure 9 * <br> * paragraph [0001] - paragraph [0039] * | 6 | |
| X | US 2023/327321 A1 (SEKIGUCHI MASAMI [JP] ET AL) 12 October 2023 (2023-10-12) | 1,9,13 | |
| A | * figures 1-9 * <br> * paragraph [0020] - paragraph [0145] * | 10,11, 14-16 | |

TECHNICAL FIELDS
SEARCHED (IPC)

H01Q

The present search report has been drawn up for all claims

| Place of search | Date of completion of the search | Examiner |
|---|---|---|
| The Hague | 3 June 2025 | Yvonnet, Yannick |

EPO FORM 1503 03.82 (P04C01)

## ANNEX TO THE EUROPEAN SEARCH REPORT
## ON EUROPEAN PATENT APPLICATION NO.

EP 25 15 3870

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | | Publication date | Patent family member(s) | | Publication date |
|---|---|---|---|---|---|
| WO 2024088500 | A1 | 02-05-2024 | CN | 120051710 A | 27-05-2025 |
| | | | WO | 2024088500 A1 | 02-05-2024 |
| EP 1120856 | B1 | 26-04-2006 | AT | E324679 T1 | 15-05-2006 |
| | | | DE | 60027530 T2 | 10-05-2007 |
| | | | EP | 1120856 A1 | 01-08-2001 |
| | | | ES | 2153323 A1 | 16-02-2001 |
| | | | WO | 0076026 A1 | 14-12-2000 |
| US 2023327321 | A1 | 12-10-2023 | CN | 116075984 A | 05-05-2023 |
| | | | EP | 4239800 A1 | 06-09-2023 |
| | | | JP | WO2022091660 A1 | 05-05-2022 |
| | | | TW | 202224268 A | 16-06-2022 |
| | | | US | 2023327321 A1 | 12-10-2023 |
| | | | WO | 2022091660 A1 | 05-05-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 12107332 B2